# EUROPEAN PATENT SPECIFICATION

(11) **EP 2 733 170 B1**
(45) Date of publication and mention of the grant of the patent: **23.09.2015**
(21) Application number: 13192632.1
(22) Date of filing: 13.11.2013
(51) Int. Cl.: B60C 1/00, C08L 9/00, C08K 5/053, C08K 5/10, C08K 5/103, C08L 9/06, C08L 21/00

(54) **Tire rubber composition and containing combination of resin and vegetable oil**
Reifengummizusammensetzung, enthaltend eine Kombination von Harz und pflanzlichem Öl
Composition de caoutchouc pour pneu et contenant une combinaison de résine et d'une huile végétale

(30) Priority: 15.11.2012 US 201213677605
(43) Date of publication of application: 21.05.2014
(73) Proprietor: The Goodyear Tire & Rubber Company, Akron, Ohio 44316 (US)
(72) Inventor: Sandstrom, Paul Harry, Cuyahoga Falls, OH Ohio 44223 (US); Rodewald, Stephan, Canal Fulton, OH Ohio 44614 (US); Ramanathan, Ahalya, Stow, OH Ohio 44224 (US)
(74) Representative: Kutsch, Bernd

(56) References cited:
- EP-A1- 0 561 761
- EP-A1- 1 075 967
- EP-A1- 1 134 254
- EP-A1- 1 329 478
- EP-A1- 1 887 038
- EP-A1- 2 289 712
- EP-A1- 2 455 232
- EP-A1- 2 460 670
- EP-A1- 2 468 815
- WO-A1-2012/012133
- WO-A1-2012/076456
- US-A1- 2004 127 617
- US-A1- 2005 148 713

## Description

### Field of the Invention

This invention relates to a rubber composition and to a tire comprising a silica reinforced rubber composition, the rubber composition containing diene based polymers in combination with traction resin(s) and vegetable oil, particularly soybean oil. Preferably, the rubber composition is used in the tire tread.

### Background of the Invention

Pneumatic rubber tires are often used for purposes where traction, (e.g. skid resistance of the tire tread on dry or wet road surfaces) is a significant consideration.

This requires tread rubber compositions which provide the desired good grip, or traction, but also provide good rolling resistance for fuel economy and good treadwear, or abrasion resistance, for extended tire service life.

Various traction resins have been suggested for use to improve the wet and dry traction of such tread compositions, such as for example, coumarone-indene resins, alkylated hydrocarbon resins, aromatic petroleum resins, dicyclopentadiene resins and styrene-alphamethylstyrene resins. For example, and not intended to be limiting, see US-B-6,525,133; US-B-6,242,523; US-B-6,221,953 and US-A-5,901,766.

However, such traction resins when used in tire tread rubber compositions also tend to increase treadwear, (reduce abrasion resistance) as a performance tradeoff. It has been discovered that the use of such traction resins in tread compositions which also contain silica as the reinforcing filler and triglyceride vegetable oil, preferably soybean oil, as the processing aid, provide the desired traction improvement with significantly better abrasion resistance which is predictive of better (reduced) treadwear performance and thus extended tire life. In one embodiment, it is desirable to use functionalized polymers, namely elastomers containing functional groups reactive with hydroxyl groups contained on silica, for this approach, particularly functionalized solution polymerization prepared styrene/butadiene rubber (S-SBR).

In practice, a choice of resin for a tire tread rubber composition may depend on its softening point to enhance traction of a tire rubber tread at an optimum operating temperature for the tire tread. For example, a resin with a softening point of 30°C might be expected to soften and become significantly hysteretic at a tire tread temperature in a range of from 20°C to 50°C and to thereby aid in providing tread traction for a tread in such temperature range. A resin with a significantly higher softening point might be desirable for a tire tread expected to operate as a significantly higher temperature (e.g. at least 100°C).

Accordingly, it is desired to evaluate whether the addition of a combination of triglyceride based vegetable oils, (e.g. soybean oil) instead of petroleum based oils together with one or more traction resins could be used in silica reinforced rubber compositions containing diene based elastomers, particularly functionalized elastomers containing one or more functional groups reactive with hydroxyl groups contained on said precipitated silica (to promote enhanced rolling resistance and treadwear performance), particularly for road-contacting tire treads to enhance wet and dry traction while minimizing changes in rolling resistance and treadwear performance.

For such evaluation, it is important to appreciate that various vegetable oils, including soybean oil, differ significantly from petroleum based oils, particularly where such vegetable oils are triglycerides which contain a significant degree of unsaturation and clearly not a linear or an aromatic petroleum based oil.

The triglyceride(s) or vegetable oils include, for example, soybean oil, sunflower oil and canola oil which are in the form of esters containing a certain degree of unsaturation. For informational purposes to illustrate the aforesaid of relative saturated, mono unsaturated and polyunsaturated contents of various vegetable oils, the following Table A is provided.

**Table A**

| Vegetable Oil | Percent Saturated | Percent Mono Unsaturated | Percent Poly Unsaturated |
|---|---|---|---|
| Soybean | 16 | 23 | 58 |
| Sunflower | 10 | 45 | 40 |
| Canola (Rapeseed) | 7 | 63 | 28 |
| Corn | 13 | 28 | 55 |
| Coconut | 87 | 6 | 2 |
| Cottonseed | 26 | 18 | 52 |
| Olive | 14 | 73 | 11 |
| Palm | 49 | 37 | 9 |
| Peanut | 17 | 46 | 32 |
| Safflower | 10 | 45 | 40 |

Therefore, such vegetable oils, such as for example, soybean oil, contain a significant unsaturation content not present in petroleum based rubber processing oils.

The challenge of combining such vegetable oils (e.g. soybean oil) with diene based polymers and traction resins and silica as the reinforcement filler in an internal rubber mixer (e.g. Banbury™ mixer) is to be evaluated with results being unknown until the evaluation is undertaken.

In the description of this invention, the terms "compounded" rubber compositions and "compounds"; where used refer to rubber compositions which have been compounded, or blended, with appropriate rubber compounding ingredients. The terms "rubber", "polymer" and "elastomer" may be used interchangeably unless otherwise indicated. The amounts of materials are usually expressed in parts of material per 100 parts of rubber by weight (phr).

US-A- 2004/0127617 describes a rubber composition comprising a combination of petroleum based oil and vegetable oil.

WO-A- 2012/076456 describes a tread for a tire comprising a rubber composition containing a vegetable oil.

WO-A- 2012/012133 describes a further tire tread comprising a rubber composition comprising a functionalized styrene/butadiene rubber, a vegetable oil plasticizer and a hydrocarbon resin.

US-A- 2005/0148713 describes a further rubber composition for a tire tread comprising a glycerol fatty acid triester and a resin.

EP-A- 1 075 967 describes a tire tread containing resins with specially-defined softening points.

Further rubber compositions comprising vegetable oil and/or traction resins are described in EP-A- 1 329 478, EP-A- 1 134 254, EP-A- 1 887 038, EP-A- 2 289 712, EP-A- 2 468 815, EP-A- 2 455 232, EP-A- 2 460 670 and EP-A- 0 561 761.

### Summary and Practice of the Invention

The invention relates to a rubber composition in accordance with claim1 and to a tire in accordance with claim 9.

Dependent claims refer to preferred embodiments of the invention.

In accordance with a preferred aspect of this invention, a rubber composition is provided comprising, based on parts by weight per 100 parts by weight of elastomer (phr):
(A) at least one conjugated diene-based elastomer including at least one conjugated diene-based elastomer that contains one or more functional groups reactive with hydroxyl groups contained on silica such as precipitated silica, and
(B) from 5 to 60, alternately from 10 to 40, phr of at least one triglyceride vegetable oil selected from soybean oil or canola oil, and
(C) from 1 to 30, alternately 2 to 20 phr, of styrene-alphamethylstyrene resin, and
(D) from 30 to 140, alternately from 50 to 120 phr of a reinforcing filler comprising:
   (1) silica, preferably precipitated silica, or
   (2) a combination of rubber reinforcing carbon black and silica or precipitated silica (containing, for example, 20 to 90 weight percent of silica, alternately from 55 to 90 weight percent silica for a silica-rich reinforcing filler) and
(E) a silica coupling agent reactive with hydroxyl groups (e.g. silanol groups) on said silica and another different moiety interactive with carbon-to-carbon double bonds of said conjugated diene-based elastomers;
wherein said rubber composition is free of oil extended elastomer (elastomer which contains petroleum based oil or vegetable oil, including soybean oil, added during the manufacturing of the elastomer).

In a further aspect, said styrene-alphamethylstyrene resin has a softening point in a range of from 65 to 95°C.

In one embodiment, said triglyceride based vegetable oils are composed of a mixture of naturally occurring triglycerides recovered from, for example soybeans, composed of at least one of, usually at least three of glycerol tri-esters of at least one and usually at least three unsaturated fatty acids. Such fatty acids typically primarily comprise, for example, of at least one of linolenic acid, linoleic acid, and oleic acid. For example, such combination of unsaturated fatty acids may comprise a blend of:

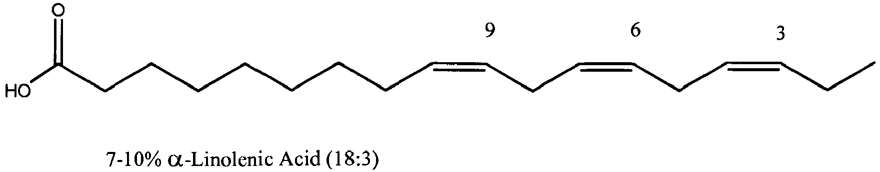

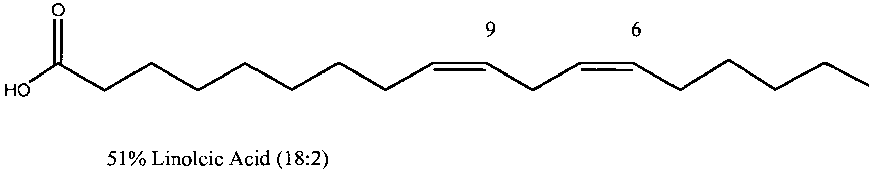

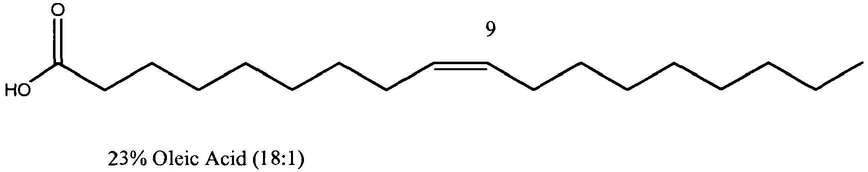

In the case of soybean oil, for example, the above represented percent distribution, or combination, of the fatty acids for the glycerol tri-esters, namely the triglycerides, is represented as being an average value and may vary somewhat depending primarily on the type, or source of the soybean crop, and may also depend on the growing conditions of a particular soybean crop from which the soybean oil was obtained. There are also significant amounts of other saturated fatty acids typically present, though these usually do not exceed 20 percent of the soybean oil.

The functionalized diene-based elastomer is a functionalized elastomer containing at least one functional group comprising at least one of amine, siloxy and carboxyl groups, particularly functional groups reactive with hydroxyl groups (e.g. silanol groups) contained on precipitated silica.

In one embodiment, at least one of said diene-based elastomers may be a tin-coupled, or silicon coupled, particularly tin-coupled, elastomer (e.g. styrene/butadiene elastomer). Such coupled elastomer may, for example, be used to promote a beneficial improvement (reduction) in tire treadwear and a beneficial reduction in tire rolling resistance when used in tire tread rubber compositions. Such tin-coupled styrene/butadiene elastomer may be prepared, for example, by coupling the elastomer with a tin coupling agent at or near the end of the polymerization used in synthesizing the elastomer. In the coupling process, live polymer chain ends react with the tin coupling agent, thereby coupling the elastomer. For example, up to four live polymer chain ends can react with tin tetrahalides, such as tin tetrachloride, thereby coupling the polymer chains together.

The coupling efficiency of the tin coupling agent is dependant on many factors, such as the quantity of live chain ends available for coupling and the quantity and type of polar modifier, if any, employed in the polymerization. For instance, tin coupling agents are generally not as effective in the presence of polar modifiers. However, polar modifiers such as tetramethylethylenediamine, are frequently used to increase the glass transition temperature of the rubber for improved properties, such as improved traction characteristics in tire tread compounds. Coupling reactions that are carried out in the presence of polar modifiers typically have a coupling efficiency of 50 to 60 percent in batch processes.

In cases where the tin coupled elastomer will be used in rubber compositions that are loaded primarily with carbon black reinforcement, the coupling agent for preparing the elastomer may typically be a tin halide. The tin halide will normally be a tin tetrahalide, such as tin tetrachloride, tin tetrabromide, tin tetrafluoride or tin tetraiodide. However, mono-alkyl tin trihalides can also optionally be used. Polymers coupled with mono-alkyl tin trihalides have a maximum of three arms. This is, of course, in contrast to elastomers coupled with tin tetrahalides which have a maximum of four arms. To induce a higher level of branching, tin tetrahalides are normally preferred. The tin tetrachloride is usually the most preferred.

In cases where the coupled elastomer may be used in compounds that are loaded with high levels of silica, the coupling agent for preparing the elastomer may, if desired, be a silicon halide. The silicon-coupling agents that can be used will normally be silicon tetrahalides, such as silicon tetrachloride, silicon tetrabromide, silicon tetrafluoride or silicon tetraiodide. However, mono-alkyl silicon trihalides can also optionally be used. Elastomers coupled with silicon trihalides have a maximum of three arms. This is, of course, in contrast to elastomers coupled with silicon tetrahalides during their manufacture which have a maximum of four arms. To induce a higher level of branching, if desired, of the elastomer during its manufacture, silicon tetrahalides are normally preferred. In general, silicon tetrachloride is usually the most desirable of the silicon-coupling agents for such purpose.

Representative examples of various diene-based elastomers are, for example, at least one of cis 1,4-polyisoprene, cis 1,4-polybutadiene, isoprene/butadiene, styrene/isoprene, styrene/butadiene and styrene/isoprene/butadiene elastomers. Additional examples of elastomers which may be used include 3,4-polyisoprene rubber, carboxylated rubber, silicon-coupled and tin-coupled star-branched elastomers. Often desired rubber or elastomers are cis 1,4-polybutadiene, styrene/butadiene rubber and cis 1,4-polyisorprene rubber.

Silica or precipitated silica may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Such silicas may, for example, also be characterized by having a dibutylphthalate (DBP) absorption value, for example, in a range of 100 to 400, and more usually 150 to 300 cc/100g.

Various commercially available silicas may be used, such as, only for example herein, silicas from PPG Industries under the Hi-Sil trademark with designations 210 and 243; silicas from Rhodia, with, for example, designations of Z1165MP and Z165GR; silicas from Evonic with, for example, designations VN2 and VN3; and chemically treated precipitated silicas such as for example Agilon™ 400 from PPG.

Representative examples of rubber reinforcing carbon blacks are, for example, those with ASTM designations of N110, N121, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990 and N991. Such rubber reinforcing carbon blacks may have iodine absorptions ranging from, for example, 9 to 145 g/kg and DBP numbers ranging from 34 to 150 cc/100 g.

Other fillers may be used in the vulcanizable rubber composition including, particulate fillers including ultra high molecular weight polyethylene (UHMWPE); particulate polymer gels such as those disclosed in US-B-6,242,534; US-B-6,207,757; US-B-6,133,364; US-B-6,372,857; US-A-5,395,891; or US-B-6,127,488, and plasticized starch composite filler such as that disclosed in US-A-5,672,639. One or more other fillers may be used in an amount ranging from about 1 to about 20 phr.

It may be desired for the precipitated silica-containing rubber composition to contain a silica coupling agent for the silica comprised of, for example,
(A) bis(3-trialkoxysilylalkyl) polysulfide containing an average in range of from 2 to 4 sulfur atoms in its connecting bridge, or
(B) an organoalkoxymercaptosilane, or
(C) their combination.

Representative of such bis(3-trialkoxysilylalkyl) polysulfide comprises bis(3-triethoxysilylpropyl) polysulfide.

It is readily understood by those having skill in the art that the vulcanizable rubber composition would be compounded by methods generally known in the rubber compounding art, such as, for example, mixing various additional sulfur-vulcanizable elastomers with said diene-based elastomer containing rubber composition and various commonly used additive materials such as, for example, sulfur and sulfur donor curatives, sulfur vulcanization curing aids, such as activators and retarders and processing additives, resins including tackifying resins and plasticizers, fillers such as rubber reinforcing fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.5 to 6 phr being often preferred. Typical amounts of tackifier resins, if used, may comprise, for example, 0.5 to 10 phr, usually 1 to 5 phr. Typical amounts of processing aids comprise 1 to 50 phr. Additional petroleum based rubber process oils, if desired, may be added in very low levels during the blending of the rubber composition in addition to the triglyceride vegetable oil(s), particularly soybean oil as the majority processing oil (e.g. less than 50 percent or less than 30 percent of the combination of vegetable and petroleum based processing oil). The additional petroleum based or derived rubber processing oils may include, for example, aromatic, paraffinic, napthenic, and low PCA oils such as MEW, TDAE, and heavy napthenic, although low PCA oils might be preferred. Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 3 phr. Typical amounts of zinc oxide may comprise, for example, 1 to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 1.5, phr. In another embodiment, combinations of a primary and a secondary accelerator might be used with the secondary accelerator being used in smaller amounts, such as, for example, from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Often desirably the primary accelerator is a sulfenamide. If a second accelerator is used, the secondary accelerator is often desirably a guanidine such as for example a diphenylguanidine, a dithiocarbamate or a thiuram compound.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The vulcanizable rubber composition containing the triglyceride oil extended SSBR may be incorporated in a variety of rubber components of an article of manufacture such as, for example, a tire. For example, the rubber component for the tire is a tread.

The pneumatic tire of the present invention may be a race tire, passenger tire, aircraft tire, agricultural, earthmover, off-the-road or truck tire. Usually desirably the tire is a passenger or truck tire. The tire may also be a radial or bias ply tire, with a radial ply tire being usually desired.

Vulcanization of the pneumatic tire of the present invention is generally carried out at conventional temperatures in a range of, for example, from 140°C to 200°C. Often it is desired that the vulcanization is conducted at temperatures ranging from 150°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts and percentages are parts by weight, usually parts by weight per 100 parts by weight rubber (phr) unless otherwise indicated.

### EXAMPLE I

In this example, the effect of using a triglyceride oil, namely soybean oil, as a replacement for petroleum based processing oil was investigated. For this Example, the rubber compositions evaluated were a 70/30 blend of functionalized solution polymerization prepared styrene/butadiene rubber (S-SBR) and high cis-polybutadiene rubber (PBD) with the addition of a traction resin to impart improved traction, particularly wet traction as well as the soybean oil. Oil extended elastomers were not used.

The rubber Samples were prepared by mixing the elastomers with silica as the major reinforcing filler. For such preparation, ingredients, other than sulfur and sulfur accelerator curatives, were mixed a first non-productive mixing stage (NP1) in an internal rubber mixer for 4 minutes to a temperature of 160°C. The resulting mixture was subsequently mixed in a second sequential non-productive mixing stage (NP2) in an internal rubber mixer to a temperature of 160°C with no additional ingredients added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual non-productive mixing stage and before the final productive mixing stage.

The basic formulation for the Control rubber Sample A and Experimental rubber Samples is presented in the following Table 1 expressed in parts by weight per 100 parts of rubber (phr) unless otherwise indicated.

**Table 1**

| Non-Productive Mixing Stage (NP1) | Parts by weight (phr) |
|---|---|
| Styrene/butadiene rubber (S-SBR)¹ | 70 or 50 |
| Cis 1,4-polybutadiene rubber (PBD)² | 30 or 50 |
| Precipitated silica³ | 65 |
| Silica coupler⁴ | 5 |
| Carbon black⁵ | 4 |
| Wax | 1.5 |
| Zinc oxide | 3.5 |
| Fatty acid⁶ | 2 |
| Processing oil, petroleum derived (naphthenic)⁷ | 12 or 20 |
| Soybean oil⁸ | 12 or 20 |
| Traction resin⁹ | 0 or 15 |
| | |

| Productive Mixing Stage (P) | |
|---|---|
| Sulfur | 1.7 |
| Sulfur cure accelerator(s)¹⁰ | 3.1 |
| Antioxidant | 3 |

| | |
|---|---|
| ¹Styrene/butadiene, solution polymerization prepared, functionalized copolymer rubber as SLR 4602 from Styron company, understood to be a tin coupled styrene/butadiene elastomer containing end siloxy functional groups reactive with hydroxyl groups of precipitated silica. ²Cis-polybutadiene rubber as BUD1207 from The Goodyear Tire & Rubber Company ³Precipitated silica as Zeosil Z1165 MP from the Rhodia Company ⁴Silica coupler as Si266™ from the Evonic Company, comprised of a bis (3-triethoxysilylpropyl) polysulfide containing an average of from about 2 to about 2.4 connecting sulfur atoms in its polysulfidic bridge ⁵N550 rubber reinforcing carbon black, ASTM identification ⁶Primarily comprising stearic, palmitic and oleic acids ⁷Petroleum based rubber processing oil as Naprex 38 from ExxonMobil Company ⁸Soybean oil as Sterling Oil from the Stratas Foods Company ⁹Traction resin as styrene/alpha-methylstyrene resin as Resin 2336™ from the Eastman Chemical Company ¹⁰Sulfonamide and diphenylguanidine accelerators | |

The following Table 2 illustrates cure behavior and various physical properties of rubber compositions based upon the basic recipe of Table 1. Where cured rubber samples are examined, such as for the stress-strain, hot rebound and hardness values, the rubber samples were cured for 14 minutes at a temperature of 160°C.

**Table 2**

| | **Parts (phr)** | | | | | |
|---|---|---|---|---|---|---|
| Rubber Samples | A | B | C | D | E | F |
| S-SBR | 70 | 70 | 70 | 50 | 50 | 50 |
| PBD | 30 | 30 | 30 | 50 | 50 | 50 |
| Petroleum processing oil | 20 | 12 | 0 | 20 | 12 | 0 |
| Soybean oil | 0 | 0 | 12 | 0 | 0 | 12 |
| Traction resin | 0 | 15 | 15 | 0 | 15 | 15 |
| | | | | | | |
| Wet Traction Indication (For Tread Running Surface) - Lower Is Better | | | | | | |
| Cold (0°C) rebound value | 24.3 | 13.4 | 14.4 | 36.1 | 25.7 | 26.3 |
| | | | | | | |
| Abrasion Resistance (Wear Resistance Indicator) - Lower is Better | | | | | | |
| Grosch¹ rate of abrasion (mg/km), high | | | | | | |
| severity (70N), 16°slip angle, disk | | | | | | |
| speed = 20 km/hr, distance = 500 m | 487 | 527 | 489 | 475 | 492 | 476 |
| Rolling Resistance (Hysteresis) Indication | | | | | | |
| Hot rebound (100°C) value (higher is better) | 66 | 64 | 63 | 62 | 60 | 58 |
| Tan delta (100°C), 10% strain, 11 Hz (lower is better) | 0.065 | 0.076 | 0.082 | 0.074 | 0.079 | 0.08 |
| Tear strength² 95º (N) (higher is better) | 71 | 84 | 104 | 84 | 98 | 107 |

| | | | | | | |
|---|---|---|---|---|---|---|
| ¹Grosch abrasion rate determination was run on an LAT-100 Abrader and measured in terms of mg/km of rubber abraded away. The test rubber sample is placed at a slip angle under constant load (Newtons) as it traverses a given distance on a rotating abrasive disk (disk from HB Schleifmittel GmbH). A high severity test was conducted at a load of 70 Newtons, a slip angle of 12 degrees and a disk speed of 20 km/hr and a sample travel distance of 250 meters. ²Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. | | | | | | |

Rubber samples A and D are Control rubber Samples that contained a blend of 70 phr functionalized S-SBR with 30 phr cis-PBD (for rubber Sample A) and 50 phr functionalized S-SBR with 50 phr cis-PBD (for rubber Sample D).

Rubber Samples B and E are comparative rubber Samples in which 15 phr of a traction resin has replaced 8 phr of petroleum based rubber processing oil used in Control rubber Samples A and D.

Rubber Samples C and F are Experimental rubber Samples, similar to comparative Samples B and E, respectively, except they contain soybean oil in place of the petroleum based processing oil and also contain 15 phr of the traction resin.

As seen in Table 2, the results clearly show the benefit of the soybean oil, in Experimental rubber Samples C and F, when used as replacement for the petroleum based rubber processing oil, when used in combination with a traction resin when compared to Comparative rubber Samples B and E. For example, when comparing Comparative rubber Sample B with Experimental rubber Sample C and when comparing Comparative rubber Sample E with Experimental rubber Sample F, one can see similar results for traction and rolling resistance predictors with an advantage in abrasion and tear resistance for Experimental rubber Samples C and F, which contain the soybean oil in place of the petroleum based rubber processing oil.

Therefore, it is concluded that this evaluation has successfully shown the advantage of replacing petroleum based processing oil with a vegetable, oil, namely soybean oil, in a rubber blend composition of a functionalized solution SBR and high cis-PBD in the presence of a traction resin. The results clearly show that one can improve the traction prediction of such compounds without giving up other critical properties such as abrasion and tear resistance while maintaining similar rolling resistance predicted performance.

## Claims

1. A rubber composition comprising, based on parts by weight per 100 parts by weight of elastomer (phr):
(A) at least one conjugated diene-based elastomer including at least one conjugated diene-based elastomer that contains one or more functional groups reactive with hydroxyl groups contained on silica, wherein said functionalized diene-based elastomer contains at least one functional group comprising at least one of amine, siloxy and carboxyl groups reactive with said hydroxyl groups contained on said silica;
(B) from 5 to 60 phr of at least one of soybean oil and canola oil;
(C) from 1 to 30 phr of a styrene-alphamethylstyrene resin;
(D) from 30 to 140 phr of a reinforcing filler comprising:
(1) silica, or
(2) a combination of carbon black and silica; and
(E) a silica coupling agent reactive with hydroxyl groups contained on the silica and another different moiety interactive with carbon-to-carbon double bonds of the conjugated diene-based elastomer;
wherein the rubber composition is free of oil extended elastomer and is exclusive of added petroleum based rubber processing oil.

2. The rubber composition of claim 1 wherein the reinforcing filler is a combination of rubber reinforcing carbon black and precipitated silica.

3. The rubber composition of claim 1 wherein the triglyceride vegetable oil is exclusive of petroleum based oil.

4. The rubber composition of at least one of the previous claims wherein the rubber composition contains from 30 to 140 phr of reinforcing filler comprising:
(A) precipitated silica, or
(B) combination of rubber reinforcing carbon black and precipitated silica, and
(C) a silica coupling agent having a moiety reactive with hydroxyl groups on said precipitated silica and another different moiety interactive with carbon-to-carbon double bonds of said conjugated diene-based elastomers.

5. The rubber composition of at least one of the previous claims wherein the styrene-alphamethylstyrene resin has a softening point in a range of from 65 to 95°C.

6. The rubber composition of at least one of the previous claims wherein at least one of said diene-based elastomers is a tin or silicon coupled elastomer.

7. The rubber composition of at least one of the previous claims wherein the rubber composition comprises from 7 to 25 phr of at least one of soybean oil and canola oil.

8. The rubber composition of at least one of the previous claims wherein the rubber composition comprises from 10 to 20 phr of the styrene-alphamethylstyrene resin.

9. A tire having a component, the component comprising the rubber composition in accordance with at least one of the previous claims.

10. The tire of claim 9 wherein the component is a tread or a tread cap.

## Patentansprüche

1. Kautschukzusammensetzung, umfassend, auf Basis von Gewichtsteilen je 100 Gewichtsteile Elastomer (ThK):
(A) mindestens ein Elastomer auf Basis konjugierten Diens, das mindestens ein Elastomer auf Basis konjugierten Diens beinhaltet, das eine oder mehrere funktionelle Gruppen enthält, die mit an Silika enthaltenen Hydroxylgruppen reaktiv sind, wobei das funktionalisierte dienbasierte Elastomer mindestens eine funktionelle Gruppe enthält, die mindestens eine von Amin-, Siloxy- und Carboxylgruppen umfasst, die mit an dem Silika enthaltenen Hydroxylgruppen reaktiv sind;
(B) 5 bis 60 ThK mindestens eines von Sojaöl und Rapsöl;
(C) 1 bis 30 ThK eines Styrol-Alphamethylstyrol-Harzes;
(D) 30 bis 140 ThK eines Verstärkungsfüllstoffs, umfassend:
(1) Silika, oder
(2) eine Kombination von Carbon Black und Silika; und
(E) einen Silika-Haftvermittler mit einem Anteil, der mit an dem Silika enthaltenen Hydroxylgruppen reaktiv ist, und einem anderen, verschiedenen Anteil, der mit Kohlenstoff-KohlenstoffDoppelbindungen des Elastomers auf Basis konjugierten Diens in Wechselwirkung tritt;
wobei die Kautschukzusammensetzung frei von ölgestrecktem Elastomer ist und unter Ausschluss zugesetzten Kautschukprozessöls auf Mineralölbasis ist.

2. Kautschukzusammensetzung nach Anspruch 1, wobei der Verstärkungsfüllstoff eine Kombination von Kautschukverstärkungs-Carbon Black und ausgefälltem Silika ist.

3. Kautschukzusammensetzung nach Anspruch 1, wobei das Triglycerid-Pflanzenöl unter Ausschluss von Öl auf Mineralölbasis ist.

4. Kautschukzusammensetzung nach mindestens einem der vorhergehenden Ansprüche, wobei die Kautschukzusammensetzung 30 bis 140 ThK Verstärkungsfüllstoff enthält, umfassend:
(A) ausgefälltes Silika, oder
(B) eine Kombination von Kautschukverstärkungs-Carbon Black und ausgefälltem Silika, und
(C) einen Silika-Haftvermittler mit einem Anteil, der mit an dem ausgefällten Silika enthaltenen Hydroxylgruppen reaktiv ist, und einem anderen, verschiedenen Anteil, der mit Kohlenstoff-Kohlenstoff-Doppelbindungen der Elastomere auf Basis konjugierten Diens in Wechselwirkung tritt.

5. Kautschukzusammensetzung nach mindestens einem der vorhergehenden Ansprüche, wobei das Styrol-Alphamethylstyrol-Harz einen Erweichungspunkt im Bereich von 65 bis 95°C aufweist.

6. Kautschukzusammensetzung nach mindestens einem der vorhergehenden Ansprüche, wobei mindestens eines der dienbasierten Elastomere ein zinn- oder siliziumgekoppeltes Elastomer ist.

7. Kautschukzusammensetzung nach mindestens einem der vorhergehenden Ansprüche, wobei die Kautschukzusammensetzung 7 bis 25 ThK mindestens eines von Sojaöl und Rapsöl umfasst.

8. Kautschukzusammensetzung nach mindestens einem der vorhergehenden Ansprüche, wobei die Kautschukzusammensetzung 10 bis 20 ThK des Styrol-Alphamethylstyrol-Harzes umfasst.

9. Reifen, der ein Bauteil aufweist, wobei das Bauteil die Kautschukzusammensetzung gemäß mindestens einem der vorhergehenden Ansprüche umfasst.

10. Reifen nach Anspruch 9, wobei das Bauteil eine Lauffläche oder ein Laufstreifenoberteil ist.

## Revendications

1. Composition de caoutchouc comprenant, basés sur des parties en poids par 100 parties en poids d'élastomère (phr) :
(A) au moins un élastomère à base de diène conjugué englobant au moins un élastomère à base de diène conjugué qui contient un ou plusieurs groupes fonctionnels aptes à réagir avec des groupes hydroxyle contenus sur la silice, ledit élastomère fonctionnalisé à base diénique contient au moins un groupe fonctionnel comprenant au moins un groupe choisi parmi des groupes, des groupes siloxy et des groupes carboxyle aptes à réagir avec lesdits groupes hydroxyle contenus sur ladite silice ;
(B) à concurrence de 5 à 60 phr, au moins une huile choisie parmi l'huile de soja et l'huile de canola ;
(C) à concurrence de 1 à 30 phr une résine de styrène-alphaméthylstyrène ;
(D) à concurrence de 30 à 140 phr, une matière de charge pour le renforcement, comprenant :
(1) de la silice ; ou
(2) une combinaison de noir de carbone et de silice ; et
(E) un agent de couplage pour la silice possédant une fraction apte à réagir avec des groupes hydroxyle contenus sur la silice et une autre fraction différente qui entre en interaction avec des liaisons doubles carbone-carbone de l'élastomère à base de diène conjugué ;
dans laquelle la composition de caoutchouc est exempte d'un élastomère allongé à l'huile et ne contient pas à l'état ajouté de l'huile plastifiante de caoutchouc à base de pétrole.

2. Composition de caoutchouc selon la revendication 1, dans laquelle la matière de charge pour le renforcement est une combinaison de noir de carbone pour le renforcement du caoutchouc et de silice précipitée.

3. Composition de caoutchouc selon la revendication 1, dans laquelle l'huile végétale triglycérique ne contient pas d'huile à base de pétrole.

4. Composition de caoutchouc selon au moins une des revendications précédentes, dans laquelle la composition de caoutchouc contient de 30 à 140 phr d'une matière de charge pour le renforcement, comprenant :
(A) de la silice précipitée ; ou
(B) une combinaison de noir de carbone pour le renforcement du caoutchouc et de silice précipitée ; et
(C) un agent de couplage pour la silice possédant une fraction apte à réagir avec des groupes hydroxyle contenus sur la silice et une autre fraction différente qui entre en interaction avec des liaisons doubles carbone-carbone desdits élastomères à base de diène conjugué.

5. Composition de caoutchouc selon au moins une des revendications précédentes, dans laquelle la résine de styrène-alphaméthylstyrène possède un point de ramollissement dans la plage de 65 à 95 °C.

6. Composition de caoutchouc selon au moins une des revendications précédentes, dans laquelle au moins un desdits élastomères à base diénique est un élastomère couplé à l'étain ou au silicium.

7. Composition de caoutchouc selon au moins une des revendications précédentes, dans laquelle la composition de caoutchouc comprend à concurrence de 7 à 25 phr, au moins une huile choisie parmi l'huile de soja et l'huile de canola.

8. Composition de caoutchouc selon au moins une des revendications précédentes, dans laquelle la composition de caoutchouc comprend de la résine de styrène-alphaméthylstyrène à concurrence de 10 à 20 phr.

9. Bandage pneumatique possédant un composant, le composant comprenant la composition de caoutchouc selon au moins une des revendications précédentes.

10. Bandage pneumatique selon la revendication 9, dans lequel le composant est une bande de roulement ou une chape de bande de roulement.
